# EUROPEAN PATENT SPECIFICATION

(11) **EP 0 321 259 B1**
(45) Date of publication and mention of the grant of the patent: **01.03.1995**
(21) Application number: 88311902.6
(22) Date of filing: 16.12.1988
(51) Int. Cl.: C08F 30/08, C08F 4/64

(54) **A process for preparing a silicon containing polymer**
Verfahren zur Herstellung eines Silicium enthaltenden Polymers
Procédé de préparation d'un polymère contenant du silicium

(30) Priority: 16.12.1987 JP 316023/87; 03.02.1988 JP 22063/88; 26.02.1988 JP 42361/88; 01.03.1988 JP 45783/88
(43) Date of publication of application: 21.06.1989
(60) Divisional application: 93117122.7
(73) Proprietor: MITSUI TOATSU CHEMICALS, Inc., Chiyoda-Ku Tokyo 100 (JP)
(72) Inventor: Itoh, Masayoshi, Sakae-ku Yokohama-shi Kanagawa-ken (JP); Wakimura, Kazuo, Sennan-shi Osaka-fu (JP); Takeuchi, Ryo, Sakae-ku Yokohama-shi Kanagawa-ken (JP); Iwata, Kenji, Yokohama-shi Kanagawa-ken (JP); Kobayashi, Mineo, Yokohama-shi Kanagawa-ken (JP); Asanuma, Tadashi, Takaishi-shi Osaka-fu (JP); Ohnaka, Junko, Moriguchi-shi Osaka-fu (JP); Tokura, Yoshiko, Wakayama-shi Wakayama-ken (JP); Yamamoto, Kazuhiko, Takaishi-shi Osaka-fu (JP)
(74) Representative: Holdcroft, James Gerald, Dr.

(56) References cited:
- EP-A- 0 317 280
- US-A- 3 223 686
- US-A- 3 953 414

## Description

### Background of the Invention

### a) Field of the Invention

The present invention relates to a process for preparing a silicon containing polymer. More specifically, the present invention relates to a process for preparing a silicon containing polymer by polymerizing a silicon containing compound in the presence of a catalyst containing a transition metal compound supported on a carrier containing a magnesium halide and an organic aluminum compound.

### b) Description of the Prior Art

Almost all commercial uses of silicon containing polymers are limited to organosiloxane.

The raw materials used to prepare organosiloxanes include alkylchlorosilanes, particularly dimethyldichlorosilane, prepared by a "direct reaction" between a silicon metal and a halogenated hydrocarbon. Other commercial uses of silicon containing polymers are limited.

Silicon containing polymers having the formulas (i) through (iv) are known: 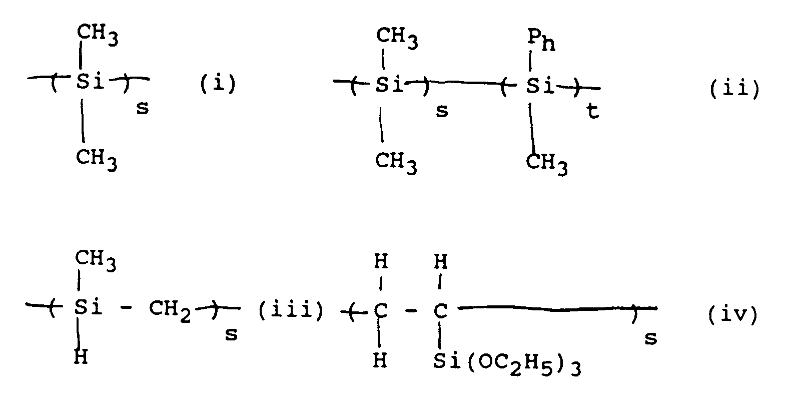
The polymer having the formula (i) is prepared by the following reaction in a solvent such as xylene 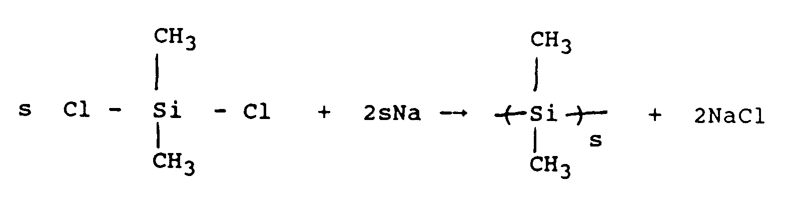
The polymer of the formula (ii) is prepared in the same manner. However, the polymer of the formula (i) is insoluble in solvents and is not thermoplasticable, whereas the polymer of the formula (ii) is soluble in solvents and is thermplasticable.

The polymer of the formula (iii) is obtained by pyrolysis of the polymer of the formula (i) under high temperature and high pressure. The polymer of the formula (iii) is soluble in solvents and is thermoplasticable. Polymers of the formulas (i), (ii) and (iii) are used in ceramic binders. Polymers of the formulas (ii) and (iii) are also used as precursors for SiC ceramics, particularly for SiC fiber (for example, Nicalon, trademark of Nippon Carbon Inc.). The polymer of the formula (iv) is a vinylsilane derivative. A copolymer of the polymer of the formula (iv) and ethylene is used widely in wire insulation applications as a water cross-linkable polyethylene.

It is known to polymerize allylsilane or copolymerize allylsilane (CH₂=CH-CH₂-SiH₃) and ethylene or propylene in the presence of a catalyst comprising TiCl₄ or TiCl₃ and an alkylaluminum compound. (Journal of Polymer Science, Vol. 31, 122 181 (1958), Italy Patent No. 606,018, U.S. Patent No. 3,223,686). However, due to the presence of a silyl group (i.e., a SiH₃ group), the polymerizibility of a silicon containing monomer is poor and results in low yield. Further, catalyst residues remain in the polymer. Thus, by using a TiCl₄ catalyst, a silicon containing polymer of high purity cannot be obtained. Further, it is also difficult economically to promote copolymerization between a silicon compound and an α-olefin because the reactivities of the silicon compound and an α-olefin such as ethylene or propylene are very different when a TiCl₄ or TiCl₃ catalyst is employed. Further, due to interactions between the catalyst and the silyl group, crosslinking between intermolecular chains during polymerization or after treatment processes occur.

The present inventors have proposed that when the polymers obtained by polymerization of the silicon compounds represented by either of the following formulas

CH₂ = CH - (R²)ₙ-SiHₘ(R³₃₋ₘ)

CH₂ = CH - (R²)ₙ-SiₚH₂ₚ₊₁

in the presence of the above mentioned catalyst are baked at a high temperature, high yield polymers are obtained that are useful as prepolymers in the preparation of ceramics (PCT application International Publication Number is WO 88/05779).

The silyl groups in the polymers are reactive and can be reacted with groups such as C = C, C = O, NH, OH, 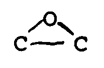
and O-O. Thus, the polymer has multifunctional applications.

### SUMMARY OF THE INVENTION

The present invention advances the state of the art by providing a process for preparing silicon containing polymers of high purity and high yield.

Another feature of the invention is to provide a process for preparing silicon containing polymers economically.

Additional features and advantages of the invention will be set forth in the description that follows and in part will be apparent from the description or may be learned by practicing the invention. The features and advantages of the invention may be realized and obtained by means of the combinations particularly pointed out in the appended claims.

To achieve these features, and in accordance with the invention, there is provided a process for preparing silicon containing polymers comprising polymerizing a silicon containing compound in the presence of a catalyst containing a transition metal compound supported on a magnesium halide containing carrier and an organic aluminum compound.

Specifically, the present invention provides a process for preparing a silicon containing polymer comprising
(1) homo-polymerizing a silicon containing compound wherein the silicon containing compound is of the formula (I) or (II):

   CH₂ = CH-(R²)ₙ-SiHₘ(R³₃₋ₘ) (I)

   CH₂ = CH-(R²)ₙ-SiₚH₂ₚ₊₁ (II)

   wherein n is zero or an integer of from 1 to 12, m is an integer of from 1 to 3, p is an integer of from 1 to 3, R² is an alkylene or a phenylene group and R³ is a methyl, a phenyl or halogen group
   in the presence of a catalyst comprising
   (a) a titanium compound supported on a magnesium halide carrier, and
   (b) an organic aluminum compound of the formula

      AℓR'ᵣX₃₋ᵣ (III)

      wherein R' is a C₁-C₁₂ alkyl group, X is a halogen and 1 ≦ r ≦ 3, and
(2) removing unreacted monomer of formula (I) or (II) from the reaction system and isolating the alkenylsilane homopolymer product.

The foregoing and other features and advantages of the present invention will be made more apparent from the following description of the preferred embodiments of the invention.

### BRIEF DESCRIPTION OF THE DRAWINGS

Figure 1 is an IR spectrum of polyvinylsilane.
Figure 2 sets forth XRD measurements of polyvinylsilane.
Figure 3 is an IR spectrum of polyallylsilane.

### DETAILED DESCRIPTION OF THE INVENTION

Reference will now be made to the preferred embodiments of the present invention. Exemplary suitable silicon containing compounds useful in the process of the invention include alkenylsilanes, for example, vinylsilane, allylsilane, butenylsilane and pentenylsilane.

Silicon containing compounds containing a silyl group can be prepared by several methods. For example, owing reaction may be employed:

SiH₄ + CH₂=CH-R²-CH=CH₂ → CH₂=CH-R²-CH₂-CH₂SiH₃

(See PCT application, International Publication Number WO 88/05779).

The demand for SiH₄ (monosilane) compounds has increased, particularly for use as polysilicon or an amorphous silicon. SiH₄ compounds may be prepared at low cost and in large quantities. It is expected that the number of applications for SiH₄ compounds will continue to increase in the future, as will application of Si₂H₆ and Si₃H₈ compounds.

### Polymerization Process

### Catalyst

The catalyst used in the process of the invention comprises a titanium compound supported on a magnesium halide carrier.

Preferably, the compound contained in the carrier is selected from the group consisting of magnesium chloride, magnesium bromide, magnesium iodide, and magnesium fluoride. More preferably, magnesium chloride is employed. Further, commercially available magnesium halide compounds can be employed.

The titanium compound used in the process of the invention is preferably a trivalent or tetravalent titanium compound, for example, titanium trichloride, titanium tetrachloride, titanium tetrabromide, titanium tetraiodide, methoxytitanium trichloride, dimethoxytitaniumdichloride and triethoxytitaniumchloride. More preferably, a chlorine containing titanium compound such as tetravalent titanium tetrachloride can be employed.

Preferably, one of the following methods is employed to support a titanium compound on a magnesium chloride carrier. A magnesium halide and a titanium compound are co-pulverized in a ball mill. A powder of magnesium halide is charged into a solution of benzene, toluene, heptane or hexane containing a liquid titanium compound. A liquid titanium compound is charged into the solution and thereafter, magnesium halide is precipitated. The titanium compound is simultaneously supported on the magnesium halide.

Other known methods can also be used. A catalyst suitable for use in the invention may also be prepared by reacting (1) a magnesium compound such as Mg(OR⁴)X, wherein R⁴ represents an alkyl group, an aryl group or derivatives thereof and X is a halogen, with (2) a titanium compound, to support the titanium compound on the magnesium compound. The magnesium compound should be partially chlorinated to form a magnesium halide.

Preferably, additives (so-called "third components") such as an electron donor, a halogenated hydrocarbon, for example, carbon tetrachloride or chloroform, are preferably present in the catalyst component. The inventors have discovered that such additives improve polymer yield and properties. The additive compounds may be added in the reaction zone during preparation of the catalyst.

The electron donors may be from compounds containing 0, N, P, S or Si. For example, an ester, an ether, a ketone, an aldehyde, an amine, an amide, a nitrile, a thioester, a thioether or an alkoxysilane compound may be employed.

Preferably, an organic acid ester or an inorganic ester such as an ester of carbonic acid, sulfuric acid, phosphoric acid, phosphorous acid and silicic acid is employed.

Exemplary suitable organic acid esters for use in the catalyst include saturated or unsaturated aliphatic acid esters such as methylformate, n-butyl formate, allylbutylate, methyl acrylate and methyl chloroacetate; aromatic carboxylic acid esters such as methyl benzoate, n-propyl benzoate, iso-propyl benzoate, cyclohexyl benzoate, methyl p-hydroxy benzoate, cyclohexyl p-hydroxy benzoate, methyl anisiate, methyl p-ethoxy benzoate, methyl p-toluate, ethyl p-toluate, phenyl p-toluate, ethyl p-amino benzoate, dimethyl terephthalate and dimethyl phthalate; and acyclic organic acid esters such as methyl cyclohexanoate.

Exemplary suitable inorganic acid esters for use in the catalyst include trimethylphosphite, triphenyl phosphite, diethyl dibenzyl phosphonate, dipropyl sulfate, iso-amyl sulfite; alkoxy silane or alkylalkoxy silane such as tetraethoxysilane and tetramethoxy silane.

Exemplary suitable ethers for use in the catalyst include diethylether, dibutylether and diphenylether. Other electron donor compounds can be ketones such as methylethylketone; aldehydes such as acetoaldehyde and benzaldehyde; amines such as n-propylamine and aniline; nitriles such as pentane dinitrile; amides such as propane amide; and thioethers such as allylbenzylsulfite.

Preferably, alkoxysilane compounds are selected from the group consisting of phenyltriethoxysilane, diphenyldiethoxysilane and methyltriethoxysilane.

Electron donor compounds can be used solely or in a mixture of two or more such compounds. Preferably, an electron donor compound is selected from the group consisting of organic acid esters, ethers and alkoxysilane compounds having an aromatic group or a derivative thereof.

The magnesium halide content in the catalyst is preferably not less than 50 weight percent, more preferably not less than 70 weight percent. The amount of titanium supported on a magnesium halide is preferably not greater than 10 weight percent, more preferably not greater than 5 weight percent, most preferably from about 0.5 to about 2 weight percent.

Exemplary suitable organic aluminum compounds for use in the invention include trimethyl aluminium, triethyl aluminum, tri-n-propyl aluminum, tri-iso-butyl aluminum, tri-n-hexyl aluminum, diethyl almuminum monochloride, di-iso-butyl aluminum monochloride, ethylaluminumsesquichloride, ethylaluminumdichloride, diethylaluminum monobromide, diethyl aluminum monoiodide and diethylaluminium monofluoride and a mixture of two or more of these organic aluminum compounds.

The electron donor compounds can be used as a component of the catalyst. The electron donor compound can be selected from the above mentioned donor compounds. Preferably, organic acid esters such as methyl benzoate, ethyl benzoate, p-toluic acid methylester, p-toluic acid ethylester, methyl anisiate and ethyl anisiate; alkoxy silane compounds such as phenyltriethoxysilane, diphenyldiethoxysilane and methyltriethoxysilane can be employed.

The mole ratio of the organic aluminum compound to the titanium compound is preferably from 1 mole to 500 of organic aluminum compound to 1 mole of titanium compound. The mole ratio of the electron donor compound to the organic aluminum compound is less than 5 moles of electron donor compound per mole of organic aluminum compound, preferably from 0.01 to 1.5 moles of electron donor compound per mole of organic aluminum compound.

### Polymerization Process

The polymerization may be carried out by any conventional process for polymerizing α-olefins.

The polymerization process is preferably carried out at a temperature of from 20°C to 100°C, more preferably from 40°C to 90°C and a pressure of from 1 to 100 kg/cm² absolute, more preferably from 1 to 50 kg/cm² absolute.

Generally, the polymerization is carried out by a solvent polymerization process in which a solvent such as an aliphatic hydrocarbon, an acyclic hydrocarbon and an aromatic hydrocarbon or a mixture thereof is used. For example, propane, butane, pentane, hexane, heptane, cyclohexane and benzene and a mixture thereof can be used.

A bulk polymerization process may be used in which a reaction monomer is used as a solvent. A vapor-phase polymerization process may also may also be employed in which polymerization is carried without any substantial solvent and a gas phase monomer is contacted with a catalyst.

The molecular weight of the polymer prepared by the present invention varies according to the reaction methods, the catalyst systems and the polymerization conditions. However, the molecular weight of the polymer can be controlled by adding hydrogen, an alkylhalide or a dialkyl zinc if necessary.

No limitation is placed on the stereoregurality and molecular weight, however, it is preferable with respect to polymer processability and solubility to obtain a polymer weight having a molecular weight of from about 100 to about 10,000,000, more preferably from about 200 to about 1,000,000.

Thanks to the use of the catalyst in the present invention, higher polymerizability of the silicon containing compound is achieved and thus polymers are easily obtained and the rate of formation of oligomers soluble in a solvent is low.

The silicon containing polymers produced by the invention can be prepared from monomers which are low in cost.

The preparation of the present polymers can be carried out in a chlorine free system whereas prior art processes use an alkylchlorosilane for a monomer. Thus in the present invention there is no corrosion of reaction equipment. Further the process of the present invention can be carried out at a lower cost.

The processability of the polymer, i.e., flowability of melted polymer and solubility to a solvent, can be easily varied by controlling the molecular weight and the stereoregularity of the polymer. The silyl groups (SiH₃) in the polymer are relatively stable and do not oxidize in air at room temperature. Rather, the silyl groups are oxidized at a temperature of about from 100 to about 200°C. Accordingly, this polymer is not difficult to handle. Since the silicon containing polymers of the present invention are soluble in a solvent and are thermoplastic, the polymer is useful in numerous applications. The polymer can be utilized as a prepolymer for ceramics (SIC), as a binder for ceramics, as a material for a semiconductor and as a photoresist. These utilization are based on the high reactivity of the Si-H bond, and the electrical/conductivity or photo-degradative tendency of Si-Si bond.

### Example 1:

### Preparation of the Solid Catalyst Component

An oscillating mill equipped with a grinding pot containing 80 steel balls having a diameter of 12 mm and an inner volume of 600 ml was used. 20 g of magnesium chloride, 2 ml of p-toluic acid methyl ester, 2 ml of carbon tetrachloride and 2 ml of ethyl silicate were placed in the grinding pot and ground for 20 hours at room temperature. Into a 200 ml-flask, 10 g of the ground mixture, 50 ml of titanium tetrachloride and 100 ml of heptane were added and reacted at 80°C for 2 hours in a nitrogen atmosphere. The resultant supernatant was removed by decantation and the solid portion was washed repeatedly eight times with 100 ml of n-heptane at room temperature. A solid catalyst component slurry (the component (A) of this invention) was obtained. A sample portion of the slurry was removed and then vaporization of n-heptane was carried out. The titanium and magnesium content of the catalyst were analyzed and determined to be 1.5 weight percent titanium and 20 weight percent magnesium.

### Polymerization

To a 500 ml autoclave, 102 g of vinylsilane, 240 ml of n-heptane, and a solid catalyst component slurry containing 2 g of solid component and 8 ml of triisobutylaluminum were added. Polymerization was carried out at 70°C for 3 hours and then unreacted vinylsilane was purged to obtain a polymer. The polymer was added to a 1 liter methanol solution by stirring, followed by filtration. 60 g of white polyvinylsilane powder were obtained. About 20 g of liquid oligomers were recovered from the filtrate.

The yield of polymer powder was 59% and the selectivity of the polymer powder (e.g. the rate of the polymer powder to the amount of the polymer powder and the liquid oligomer recovered) was 75%. The amount of polymerized polymer was calculated by analyzing titanium and was found to be 200 g/g-Ti.

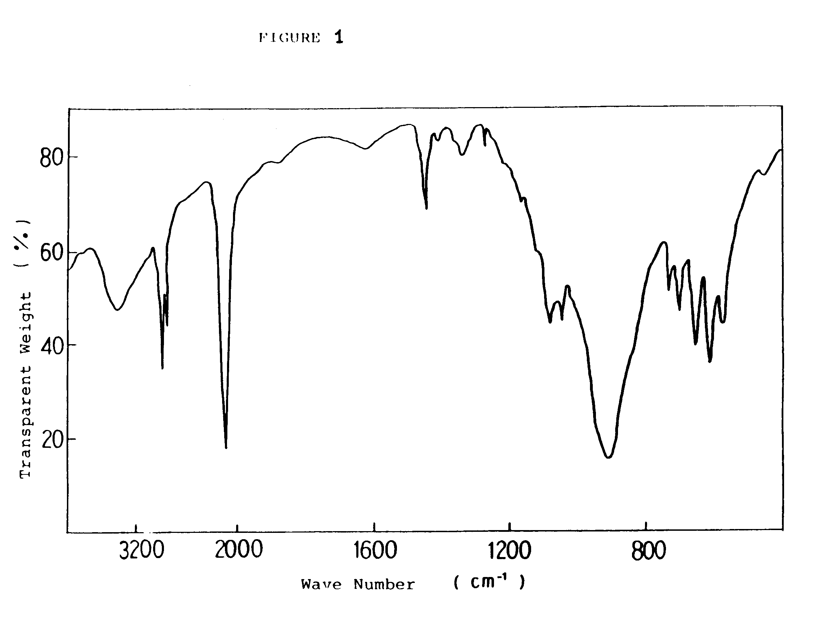

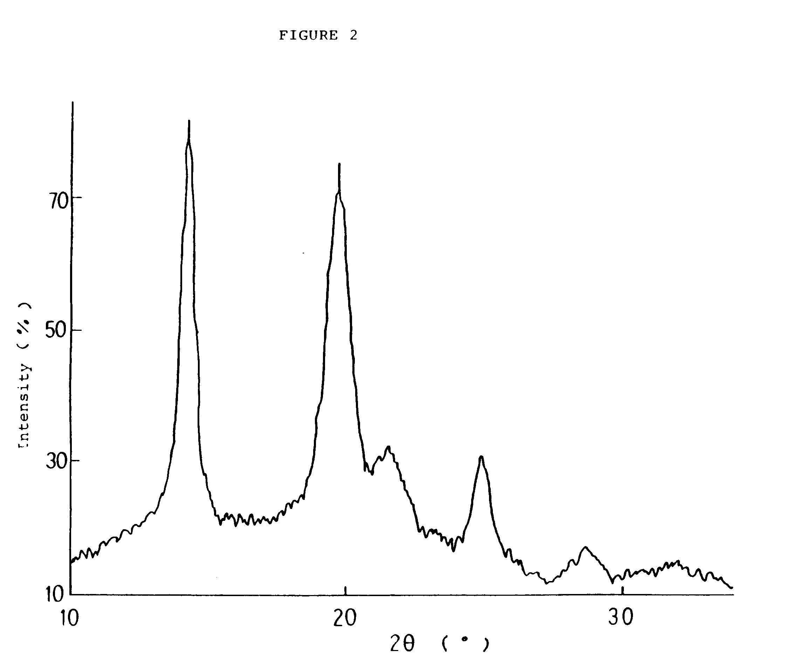

The IR spectrum and XRD measurements of the polymer are shown in Figures 1 and Figure 2 respectively.

### Comparative Example 1:

Example 1 was repeated except that 2 g of titanium trichloride catalyst (TOHO TITANIUM INC. Ti content 24 weight percent) and 7 ml of triisobutylaluminum were used. 16 g of polymer powder and about 50 g of liquid oligomer were recovered from the filtrate.

The yield of the polymer powder was 16% and the selectivity of the polymer powder was 24%.

The amount of polymerized polymer was calculated by analyzing titanium and was found to be 33 g/g-Ti.

### Example 2:

Example 1 was repeated except that 109 g of allylsilane, rather than vinylsilane were used. 96 g of polymer powder of allylsilane were obtained and about 10 g of liquid oligomer were recovered from the filtrate.

The yield of the polymer powder was 88% and the selectivity of the polymer powder was 91%.

The amount of the polymerized polymer was calculated by analyzing titanium and was found to be 3200 g/g-Ti.

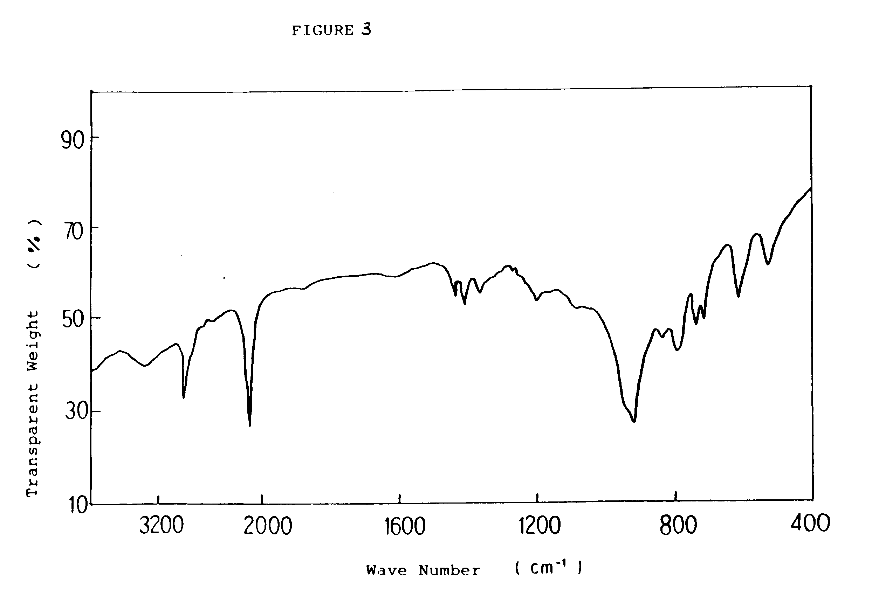

The IR spectrum of the polyallylsilane obtained is shown in Figure 3.

### Comparative Example 2:

Example 2 was repeated except that the catalyst used in Comparative Example 1 was employed rather than the catalyst of Example 2. 45 g of polymer powder were obtained and about 50 g of liquid oligomer were recovered from the filtrate.

The yield of the polymer powder was 41% and the selectivity of the powder polymer was 47%.

The amount of the polymerized polymer was calculated by analyzing titanium and was found to be 94 g/g-Ti.

### Example 3:

Example 1 was repeated except that 2 ml of ethyl benzoate were added to the polymerization autoclave together with the solid catalyst component slurry and triisobutylaluminum. 44 g of the polymer powder and about 5 g of liquid oligomer were recovered from the filtrate.

The yield of the polymer powder was 43% and the selectivity of the polymer powder was 90%.

The amount of the polymerized polymer was calculated by analyzing titanium and was found to be 1467 g/g-Ti.

Our EP-A-0 317 280 was published on 24th May 1989 (i.e. after the actual filing date of the present application). It discloses an α-olefin block copolymer obtained by first polymerizing an alkenylsilane of the formula CH₂=CH-(CH₂)ₙ-Si Hₘ(R₃₋ₘ) in which n is 0 or an integer of 1-12, m is an integer of 1-3 and R denotes a phenyl group, methyl group or a chlorine atom, and then polymerizing an α-olefin in the presence of a stereoregular catalyst, and its preparation by a two-stage polymerization process.

## Claims

1. A process for preparing a silicon containing polymer comprising
(1) homo-polymerizing a silicon containing compound of the formula (I) or (II):
CH₂ = CH-(R²)ₙ-SiHₘ(R³₃₋ₘ) (I)
CH₂ = CH-(R²)ₙ-SiₚH₂ₚ₊₁ (II)
wherein n is zero or an integer of from 1 to 12, m is an integer of from 1 to 3, p is an integer of from 1 to 3, R² is an alkylene or a phenylene group and R³ is a methyl, phenyl or halogen group in the presence of a catalyst comprising
(a) a titanium compound supported on a magnesium halide carrier, and
(b) an organic aluminum compound of the formula
AℓR'ᵣX₃₋ᵣ
wherein R' is a C₁-C₁₂ alkyl group, X is a halogen and 1 ≦ r ≦ 3, and
(2) removing unreacted monomer of formula (I) or (II) from the reaction system and isolating the alkenylsilane homopolymer product.

2. The process of claim 1 wherein said silicon containing compound is selected from the group consisting of vinylsilane, allylsilane, butenylsilane and pentenylsilane.

3. The process of claim 1 wherein said magnesium halide compound is selected from the group consisting of magnesium chloride, magnesium bromide, magnesium iodide, and magnesium fluoride.

4. The process of claim 1 wherein said titanium compound is selected from the group consisting of a trivalent and a tetravalent titanium compound.

5. The process of claim 4 wherein said titanium compound is selected from the group consisting of titanium trichloride, titanium tetrachloride, titanium tetrabromide, titanium tetraiodide, methoxy titanium trichloride, dimethoxy titanium dichloride and triethoxy titanium chloride.

6. The process of claim 1 wherein the catalyst component (a) contains a halogenated hydrocarbon.

7. The process of claim 6 wherein said halogenated hydrocarbon compound is selected from the group consisting of carbon tetrachloride or chloroform.

8. The process of claim 1 wherein the catalyst component (a) contains at least one electron donor compound.

9. The process of claim 8 wherein said electron donor compound is selected from the group consisting of ester, ether, ketone, aldehyde, amine, amide, nitrile, thioester, thioether and alkoxysilane compounds.

10. The process of claim 9 wherein said ester is an organic acid ester.

11. The process of claim 9 wherein said alkoxysilane compound is selected from the group consisting of alkoxysilane compounds having an aromatic group and derivatives of such alkoxysilane compounds.

12. The process of claim 1 wherein the catalyst comprises not greater than 10 weight percent titanium and not less that 70 weight percent of a magnesium halide compound.

13. The process of claim 1 wherein the catalyst comprises not greater than 5 weight percent titanium and not less than 50 weight percent of a magnesium halide compound.

14. The process of claim 1 wherein the catalyst comprises from 0.5 to 2 weight percent titanium and not less than 70 weight percent of a magnesium halide compound.

15. The process of claim 1 wherein said organic aluminum compound is selected from the group consisting of trimethyl aluminum, triethyl aluminum, tri-n-propyl aluminum, tri-iso-butyl aluminum, tri-n-hexyl aluminum, diethyl aluminum monochloride, di-iso-butyl aluminum monochloride, ethyl aluminum sesquichloride, ethyl aluminum dichloride, diethyl aluminum monobromide, diethyl aluminum monoiodide, diethylaluminum monofluoride and a mixture of at least two of these compounds.

16. The process of claim 1 wherein said catalyst compound further comprises an electron donor compound.

17. The process of claim 16 wherein said electron donor compound is selected from the group consisting of ester, ether, ketone, aldehyde, amine, amide, nitrile, thioester, thioether, and alkoxysilane compounds.

18. The process of claim 1 wherein the molar ratio of the organic aluminum compound to the titanium compound is from 1 to 500 moles of organic aluminum compound per mole of titanium compound.

19. The process of claim 16 wherein the molar ratio of the electron donor compound to the organic aluminum compound is not less than 5 moles of electron donor compound per mole of organic aluminum compound.

20. The process of claim 1 wherein polymerization is carried out at a temperature of from 20°C to 100°C.

21. The process of claim 1 wherein polymerization is carried out at a pressure of from 1 kg/cm²abs to 100 kg/cm²abs.

## Patentansprüche

1. Verfahren zur Herstellung eines siliziumhaltigen Polymeren umfassend:
(1) die Homopolymerisation eines Siliziums enthaltend die Verbindung der Formel (I) oder (II):
CH₂ = CH-(R²)ₙ-SiHₘ(R³₃₋ₘ) (I)
CH₂ = CH-(R²)ₙ-SiₚH₂ₚ₊₁ (II),
worin n 0 oder eine ganze Zahl von 1 - 12 ist,
m eine ganze Zahl von 1 - 3 ist,
p eine ganze Zahl von 1 - 3 ist,
R² eine Alkylen- oder eine Phenylengruppe darstellt, und
R³ ein Methyl, Phenyl oder eine Halogengruppe ist
in Anwesenheit eines Katalysators, enthaltend
(a) eine Titanverbindung, die auf einem Magnesiumhalogenidträger getragen wird und
(b) eine organische Aluminiumverbindung der Formel
AlR'ᵣX₃₋ᵣ ,
worin R'eine C₁-C₁₂ Alkylgruppe, X ein Halogen
und 1 ≦ r ≦ 3 sind, und
(2) Entfernung des nicht umgesetzten Monomeren der Formel (I) oder (II) aus dem Reaktionssystem und Isolierung des Alkenylsilanhomopolymerproduktes.

2. Verfahren nach Anspruch 1, worin die siliziumhaltige Verbindung ausgewählt ist aus der Gruppe bestehend aus Vinylsilan, Allylsilan, Butenylsilan und Pentenylsilan.

3. Verfahren nach Anspruch 1, worin die Magnesiumhalogenidverbindung ausgewählt ist aus der Gruppe bestehend aus Magnesiumchlorid, Magnesiumbromid, Magnesiumjodid und Magnesiumfluorid.

4. Verfahren nach Anspruch 1, worin die besagte Titanverbindung ausgewählt ist aus der Gruppe bestehend aus einer trivalenten und einer tetravalenten Titanverbindung.

5. Verfahren nach Anspruch 4, worin besagte Titanverbindung ausgewählt ist aus der Gruppe bestehend aus Titantrichlorid, Titantetrachlorid, Titantetrabromid, Titantetrajodid, Methoxytitantrichlorid, Dimethoxytitandichlorid und Triäthoxytitanchlorid.

6. Verfahren nach Anspruch 1, worin die Katalysatorkomponente (a) einen halogenierten Kohlenwasserstoff enthält.

7. Verfahren nach Anspruch 6, worin besagte halogenierte Kohlenwasserstoffverbindung ausgewählt ist aus der Gruppe bestehend aus Kohlenstofftetrachlorid oder Chloroform.

8. Verfahren nach Anspruch 1, worin die Katalysatorkomponente (a) wenigstens eine Elektronendonatorverbindung enthält.

9. Verfahren nach Anspruch 8, worin besagte Elektronendonatorverbindung ausgewählt ist aus der Gruppe bestehend aus Ester-, Äther-, Keton-, Aldehyd-, Amin-, Amid-, Nitril-, Thioester-, Thioäther- und Alkoxysilanverbindungen.

10. Verfahren nach Anspruch 9, worin besagter Ester ein Ester einer organischen Säure ist.

11. Verfahren nach Anspruch 9, worin besagte Alkoxysilanverbindung ausgewählt ist aus der Gruppe bestehend aus Alkoxysilanverbindungen mit einer aromatischen Gruppe und Derivaten solcher Alkoxysilanverbindungen.

12. Verfahren nach Anspruch 1, worin der Katalysator nicht mehr als 10 Gew.-% Titan und nicht weniger als 70 Gew.-% einer Magnesiumhalogenidverbindung umfaßt.

13. Verfahren nach Anspruch 1, worin der Katalysator nicht mehr als 5 Gew.-% Titan und nicht weniger als 50 Gew.-% einer Magnesiumhalogenidverbindung umfaßt.

14. Verfahren nach Anspruch 1, worin der Katalysator 0,5 bis 2 Gew.-% Titan und nicht weniger als 70 Gew.-% einer Magnesiumhalogenidverbindung umfaßt.

15. Verfahren nach Anspruch 1, worin die besagte organische Aluminiumverbindung ausgewählt ist aus der Gruppe bestehend aus Trimethylaluminium, Triäthylaluminium, Tri-n-propyl-aluminium, Tri-iso-butyl-aluminium, Tri-n-hexylaluminium, Diäthylaluminiummonochlorid, Di-iso-butylaluminiummonochlorid, Äthylaluminiumsesquichlorid, Äthylaluminiumdichlorid, Diäthylaluminiummonobromid, Diäthyl-aluminium-monojodid, Diäthylaluminiummonofluorid und eine Mischung aus wenigstens 2 von 3 Verbindungen.

16. Verfahren nach Anspruch 1, worin besagte Katalysatorverbindung weiterhin eine Elektronendonatorverbindung umfaßt.

17. Verfahren nach Anspruch 16, worin besagte Elektronendonatorverbindung ausgewählt ist aus der Gruppe bestehend aus Ester-, Äther-, Keton-, Aldehyd-, Amin-, Amid-, Nitril-, Thioester-, Thioäther- und Alkoxysilanverbindungen.

18. Verfahren nach Anspruch 1, worin das molare Verhältnis der organischen Aluminiumverbindung zur Titanverbindung von 1 bis 500 Mol der organischen Aluminiumverbindung pro Mol der Titanverbindung beträgt.

19. Verfahren nach Anspruch 16, worin das molare Verhältnis der Elektronendonatorverbindung zur organischen Aluminiumverbindung nicht geringer als 5 Mol der Elektronendonatorverbindung pro Mol der organischen Aluminiumverbindung beträgt.

20. Verfahren nach Anspruch 1, worin die Polymerisation bei einer Temperatur von 20°C bis 100°C durchgeführt wird.

21. Verfahren nach Anspruch 1, worin die Polymerisation bei einem Druck von 1 kg/cm² abs bis 100 kg/cm² abs durchgeführt wird.

## Revendications

1. Procédé pour préparer un polymère silicié comprenant
(1) l'homopolymérisation d'un composé silicié de formule (I) ou (II) :
CH₂=CH-(R²)ₙ-SiHₘ(R³₃₋ₘ) (I)
CH₂=CH-(R²)ₙ-SiₚH₂ₚ₊₁ (II)
où n est zéro ou un entier de 1 à 12, m est un entier de 1 à 3, p est un entier de 1 à 3, R² est un groupe alkylène ou phénylène et R³ est un groupe méthyle, phényle ou halogène
en présence d'un catalyseur comprenant
(a) un composé du titane porté sur un support d'halogénure de magnésium et
(b) un composé organique de l'aluminium de formule
AlR'ᵣX₃₋ᵣ
dans laquelle R' est un groupe alkyle en C₁-C₁₂, X est un halogène et 1 ≦ r ≦3 et
(2) l'élimination du monomère de formule (I) ou (II) n'ayant pas réagi du système réactionnel et l'isolement de l'homopolymère d'alcénylsilane produit.

2. Procédé selon la revendication 1, dans lequel ledit composé silicié est choisi dans le groupe constitué par le vinylsilane, l'allylsilane, le buténylsilane et le penténylsilane.

3. Procédé selon la revendication 1, dans lequel ledit halogénure de magnésium est choisi dans le groupe constitué par le chlorure de magnésium, le bromure de magnésium, l'iodure de magnésium et le fluorure de magnésium.

4. Procédé selon la revendication 1, dans lequel ledit composé du titane est choisi dans le groupe constitué par un composé du titane trivalent ou tétravalent.

5. Procédé selon la revendication 4, dans lequel ledit composé du titane est choisi dans le groupe constitué par le trichlorure de titane, le tétrachlorure de titane, le tétrabromure de titane, le tétra-iodure de titane, le trichlorure de méthoxytitane, le dichlorure de diméthoxytitane et le chlorure de triéthoxytitane.

6. Procédé selon la revendication 1, dans lequel le composant catalytique (a) contient un hydrocarbure halogéné.

7. Procédé selon la revendication 6, dans lequel ledit composé hydrocarbure halogéné est choisi dans le groupe constitué par le tétrachlorure de carbone ou le chloroforme.

8. Procédé selon la revendication 1, dans lequel le composant catalytique (a) contient au moins un composé donneur d'électrons.

9. Procédé selon la revendication 8, dans lequel ledit composé donneur d'électrons est choisi dans le groupe constitué par les esters, éthers, cétones, aldéhydes, amines, amides, nitriles, thioesters, thioéthers et alcoxysilanes.

10. Procédé selon la revendication 9, dans lequel ledit ester est un ester d'acide organique.

11. Procédé selon la revendication 9, dans lequel ledit composé alcoxysilane est choisi dans le groupe constitué par les composés alcoxysilanes ayant un groupe aromatique et les dérivés de ces composés alcoxysilanes.

12. Procédé selon la revendication 1, dans lequel le catalyseur ne comprend pas plus de 10 % en poids de titane et pas moins de 70 % en poids d'un composé halogénure de magnésium.

13. Procédé selon la revendication 1, dans lequel le catalyseur ne comprend pas plus de 5 % en poids de titane et pas moins de 50 % en poids d'un composé halogénure de magnésium.

14. Procédé selon la revendication 1, dans lequel le catalyseur comprend de 0,5 à 2 % en poids de titane et pas moins de 70 % en poids d'un composé halogénure de magnésium.

15. Procédé selon la revendication 1, dans lequel ledit composé organique de l'aluminium est choisi dans le groupe constitué par le triméthylaluminium, le triéthylaluminium, le tri-n-propylaluminium, le tri-isobutylaluminium, le tri-n-hexylaluminium, le monochlorure de diéthylaluminium, le monochlorure de diisobutylaluminium, le sesquichlorure d'éthylaluminium, le dichlorure d'éthylaluminium, le monobromure de diéthylaluminium, le mono-iodure de diéthylaluminium, le monofluorure de diéthylaluminium et un mélange d'au moins deux de ces composés.

16. Procédé selon la revendication 1, dans lequel ledit composé catalytique comprend de plus un composé donneur d'électrons.

17. Procédé selon la revendication 16, dans lequel ledit composé donneur d'électrons est choisi dans le groupe constitué par les esters, éthers, cétones, aldéhydes, amines, amides, nitriles, thioesters, thioéthers et alcoxysilanes.

18. Procédé selon la revendication 1, dans lequel le rapport molaire du composé organique de l'aluminium au composé du titane est de 1 à 500 moles du composé organique de l'aluminium par mole du composé du titane.

19. Procédé selon la revendication 16, dans lequel le rapport molaire du composé donneur d'électrons au composé organique de l'aluminium n'est pas inférieur à 5 moles du composé donneur d'électrons par mole du composé organique de l'aluminium.

20. Procédé selon la revendication 1, dans lequel la polymérisation est effectuée à une température de 20°C à 100°C.

21. Procédé selon la revendication 1, dans lequel la polymérisation est effectuée à une pression de 1 kg/cm² absolu à 100 kg/cm² absolus.
